# EUROPEAN PATENT SPECIFICATION

(11) **EP 2 834 494 B1**
(45) Date of publication and mention of the grant of the patent: **12.01.2022**
(21) Application number: 13831207.9
(22) Date of filing: 28.03.2013
(51) Int. Cl.: F02C 7/36, F02C 3/107, F02K 3/06

(54) **GEARED TURBOFAN ENGINE**
GETRIEBEFAN
TURBORÉACTEUR DOUBLE FLUX À RÉDUCTEUR

(30) Priority: 02.04.2012 US 201261619133 P; 12.04.2012 US 201213445095
(43) Date of publication of application: 11.02.2015
(60) Divisional application: 16190821.5
(73) Proprietor: Raytheon Technologies Corporation, Farmington, CT 06032 (US)
(72) Inventor: SCHWARZ, Frederick, M., Glastonbury, CT 06033 (US); KUPRATIS, Daniel, Bernard, Wallingford, CT 06492 (US)
(74) Representative: Dehns
(86) International application number: PCT/US2013/034313
(87) International publication number: WO 2014/031182

(56) References cited:
- US-A- 5 466 198
- US-A1- 2008 098 715
- US-A1- 2009 053 058
- US-A1- 2009 053 058
- US-B2- 7 334 392
- DENÓS R ET AL: "GEARED FAN", AERO-ENGINE DESIGN: FROM STATE-OF-THE-ART TURBOFANS TOWARDS INNOVATIVE ARCHITECTURES - HARDCOVER. LECTURES SERIES 2008-03,, 3 March 2008 (2008-03-03), pages 1-26, XP003035510,
- Jayant Sabnis ET AL: "THE PW1000G PURE POWER? NEW ENGINE THE PW1000G PURE POWER? NEW ENGINE CONCEPT AND ITS IMPACT ON MRO Jayant Sabnis Vice President, System Functional Design Av Week Engine MRO Forum", , 1 December 2010 (2010-12-01), pages 1-45, XP055155486, Av Week engine MRO Forum, Munich, Germany Retrieved from the Internet: URL:http://www.srs.aero/wordpress/wp-conte nt/uploads/2010/12/Day2-The-PW1000G-Pure-P ower-New-Engine-Concept.SABNISPW.pdf [retrieved on 2014-11-27]

## Description

### BACKGROUND OF THE INVENTION

This application relates to a geared turbofan gas turbine engine, wherein the low and high pressure spools rotate in the same direction relative to each other.

Gas turbine engines are known, and typically include a fan delivering air into a compressor section, and outwardly as bypass air to provide propulsion. The air in the compressor is delivered into a combustion section where it is mixed with fuel and burned. Products of this combustion pass downstream over turbine rotors, driving them to rotate. Typically there are low and high pressure compressors, and low and high pressure turbines.

The high pressure turbine typically drives the high pressure compressor as a high spool, and the low pressure turbine drives the low pressure compressor and the fan. Historically, the fan and low pressure compressor were driven at a common speed.

More recently, a gear reduction has been provided on the low pressure spool such that the fan and low pressure compressor can rotate at different speeds. It desirable to have more efficient engines that have more compact turbines to limit efficiency loses.

A prior art gas turbine engine, having the features of the preamble of claim 1, is disclosed in US-5,466,198.

### SUMMARY

The present invention provides a gas turbine engine as recited in claim 1.

In a further embodiment, , the speed changing mechanism is a gear reduction.

In a further embodiment according to any of the previous embodiments, a planet gear is utilized to maintain the first direction of rotation between the fan and the low pressure spool.

In a further embodiment according to any of the previous embodiments, the planet gear arrangement has a gear ratio above 2.3:1, meaning that the low pressure spool turns at least or equal to about 2.3 times as fast as the fan.

### BRIEF DESCRIPTION OF THE DRAWINGS

Figure 1 schematically shows a gas turbine engine.
Figure 2 schematically shows rotational features of one type of such an engine.
Figure 3 is a detail of the turbine section volume

### DETAILED DESCRIPTION

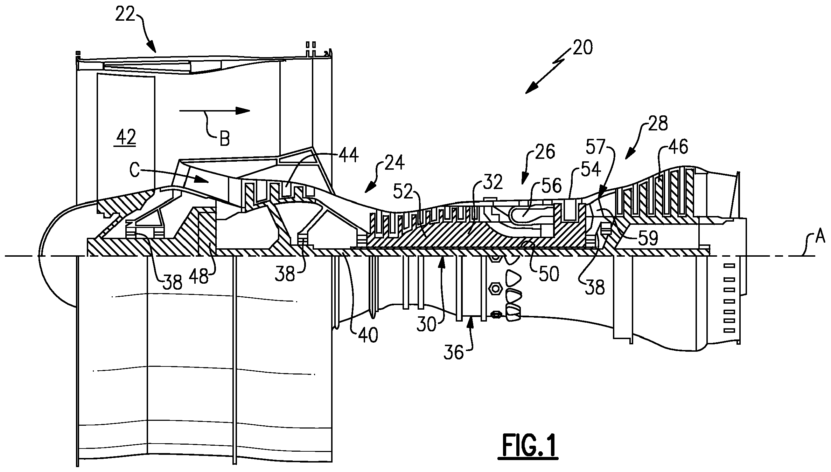

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include, for example, an augmentor section, or a different arrangement of sections, among other systems or features. The fan section 22 drives air along a bypass flowpath B while the compressor section 24 drives air along a core flowpath C for compression and communication into the combustor section 26 then expansion through the turbine section 28. For purposes of this application, the terms "low" and "high" as applied to speed or pressure are relative terms. The "high" speed and pressure would be higher than that associated with the "low" spools, compressors or turbines, however, the "low" speed and/or pressure may actually be "high."

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. The terms "high" and "low" in relation to both the speed and pressure of the components are relative to each other, and not to an absolute value. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path and act as inlet stator vanes to turn the flow to properly feed the first blades of the low pressure turbine. The turbines 46, 54 rotationally drive the respective low speed spool 30 and high speed spool 32 in response to the expansion.

The engine 20 has bypass airflow B, and in one example is a high-bypass geared aircraft engine. The bypass ratio may be defined as the amount of air delivered into the bypass duct divided by the amount delivered into the core flow. In a further example, the engine 20 bypass ratio is greater than about six, with an example embodiment being greater than ten, the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten, the fan diameter is significantly larger than that of the low pressure compressor 44, and the low pressure turbine 46 and the low pressure turbine has a pressure ratio that is greater than about five. Low pressure turbine 46 pressure ratio is the total pressure measured prior to inlet of low pressure turbine 46 as related to the pressure at the outlet of the low pressure turbine 46 prior to an exhaust nozzle. The geared architecture 48 may be a planet gear arrangement such that the fan will rotate in the same direction as the low spool. It should be understood, however, that the above parameters are only exemplary of one embodiment of a geared architecture engine.

A greatest amount of thrust is provided by the bypass flow B due to the high bypass ratio. The fan section 22 of the engine 20 is designed for a particular flight condition-typically cruise at about 0.8 Mach and about 35,000 feet (10,668 metres). The flight condition of 0.8 Mach and 35,000 ft (10,668 metres), with the engine at its best fuel consumption - also known as "bucket cruise Thrust Specific Fuel Consumption ('TSFC')" - is the industry standard parameter of lbm of fuel being burned per hour divided by lbf of thrust the engine produces at that minimum point. "Low fan pressure ratio" is the pressure ratio across the fan blade alone, before the Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram deg R) / 518.7)^0.5]. The "Low corrected fan tip speed" as disclosed herein according to one non-limiting embodiment is less than about 1150 ft / second (350.5 m/second) at the same cruise point.

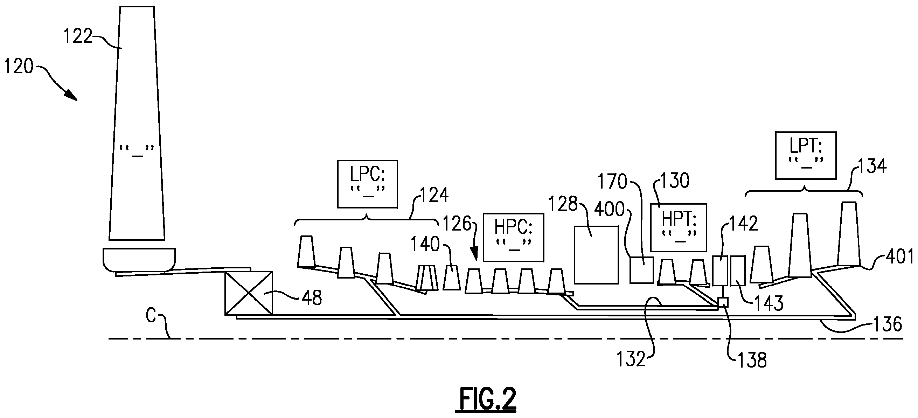

Figure 2 shows detail of an engine 120, which may generally have the features of engine 20 of Figure 1. A fan 122 is positioned upstream of a low pressure compressor 124, which is upstream of a high pressure compressor 126. A combustor 128 is positioned downstream of the high pressure compressor 126. A mid-turbine frame 142 may be positioned at a downstream end of the high pressure turbine 130, and supports a bearing 138, shown schematically, to support the aft end of the high pressure turbine 130, and a high pressure spool 132. A low pressure turbine 134 is positioned downstream of a mid-turbine frame 142. A low spool 136, driven by the low pressure turbine 134, drives the low pressure compressor 124. The speed change mechanism 48 causes the fan 122 to rotate at a different speed than the low pressure compressor 134. In embodiments of this invention, the speed input to output ratio for the speed change mechanism is above or equal to 2.3:1, and up to less than or equal to 13:1. The gear also causes fan 122 to rotate in the same direction relative to the low pressure compressor 124. As mentioned above, a planet gear arrangement may be utilized to cause the fan 122 to rotate in the same direction ("-") relative to the low pressure compressor 124. In this embodiment the fan generally has less than 26 blades, and the low pressure turbine has at least three stages, and up to six stages. The high pressure turbine generally has one or two stages as shown.

In this particular embodiment, the low pressure compressor 124 and the low pressure turbine 134 rotate in one direction ("-") and the high pressure turbine 130, the high pressure compressor 126, rotate in the same direction ("-") as does fan 122.

A strut 140 is shown between the low pressure compressor 124 and the high pressure compressor 126. The strut 140 spans the gas path, and has an airfoil shape, or at least a streamline shape. The combination of a blade at the exit of the low pressure compressor 124, the strut 140, and a variable vane, and then the first blade of the high pressure compressor 126 is generally encompassed within the structure illustrated as the strut 140.

Since the compressor sections 124 and 126 rotate in the same direction, the several airfoils illustrated as the element 140 are required to do less turning of the air flow.

As will be explained below, since the turbine section is provided with a highly cambered vane, there is less turning required between the two turbine sections. Since the compressor is forcing flow with an adverse pressure gradient, and whereas the turbine has a favorable pressure gradient, this overall engine architecture is benefited by the illustrated combination.

Highly cambered inlet guide vanes 143 are positioned in a location intermediate the mid-turbine frame 142 and the most upstream rotor in the low pressure turbine 134. The vanes 143 must properly direct the products of combustion downstream of the high pressure turbine 130 as they approach the first rotor of the low pressure turbine 134. It is desirable for reducing the overall size of the low pressure turbine that the flow be properly directed when it initially encounters the first stage of the low pressure turbine section.

The above features achieve a more compact turbine section volume relative to the prior art, including both the high and low pressure turbines. A range of materials can be selected. As one example, by varying the materials for forming the low pressure turbine, the volume can be reduced through the use of more expensive and more exotic engineered materials, or alternatively, lower priced materials can be utilized. In three exemplary embodiments the first rotating blade of the Low Pressure Turbine can be a directionally solidified casting blade, a single crystal casting blade or a hollow, internally cooled blade. All three embodiments will change the turbine volume to be dramatically smaller than the prior art by increasing low pressure turbine speed. In addition, high efficiency blade cooling may be utilized to further result in a more compact turbine section.

Due to the compact turbine section, a power density, which may be defined as thrust in pounds force produced divided by the volume of the entire turbine section, may be optimized. The volume of the turbine section is defined by an inlet of a first turbine vane in the high pressure turbine to the exit of the last rotating airfoil in the low pressure turbine, and may be expressed in cubic inches. The static thrust at the engine's flat rated Sea Level Takeoff condition divided by a turbine section volume is defined as power density. The sea level take-off flat-rated static thrust may be defined in lbs force, while the volume may be the volume from the annular inlet of the first turbine vane in the high pressure turbine to the annular exit of the downstream end of the last rotor section in the low pressure turbine. The maximum thrust may be Sea Level Takeoff Thrust "SLTO thrust" which is commonly defined as the flat-rated static thrust produced by the turbofan at sea-level.

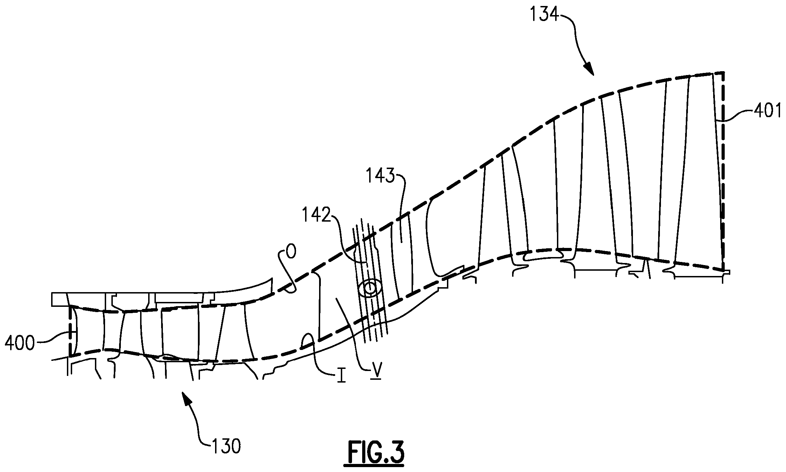

The volume V of the turbine section may be best understood from Figure 3. As shown, the frame 142 and vane 143 are intermediate the high pressure turbine section 130, and the low pressure turbine section 134. The volume V is illustrated by dashed line, and extends from an inner periphery I to an outer periphery O. The inner periphery is somewhat defined by the flowpath of the rotors, but also by the inner platform flow paths of vanes. The outer periphery is defined by the stator vanes and outer air seal structures along the flowpath.

The volume extends from a most upstream end of the vane 400 at the beginning of the high pressure turbine 130, typically its leading edge, and to the most downstream edge 401 of the last rotating airfoil in the low pressure turbine section 134. Typically this will be the trailing edge of that airfoil.

The power density in the disclosed gas turbine engine is much higher than in the prior art. Eight exemplary engines are shown below which incorporate turbine sections and overall engine drive systems and architectures as set forth in this application, and can be found in Table I as follows (where 1 lbf= 4,448 N, 1 inch = 2.54 cm and 1 lbf/in³ = 271.4 kN/m³):

**TABLE 1**

| Engine | Thrust SLTO (lbf) | Turbine section volume from the Inlet | Thrust/turbine section volume (lbf/in³) |
|---|---|---|---|
| 1 | 17,000 | 3,859 | 4.41 |
| 2 | 23,300 | 5,330 | 4.37 |
| 3 | 29,500 | 6,745 | 4.37 |
| 4 | 33,000 | 6,745 | 4.84 |
| 5 | 96,500 | 31,086 | 3.10 |
| 6 | 96,500 | 62,172 | 1.55 |
| 7 | 96,500 | 46,629 | 2.07 |
| 8 | 37,098 | 6,745 | 5.50 |

Thus, in embodiments, the power density would be greater than or equal to about 1.5 lbf/in³ (407.17 kN/m³). More narrowly, the power density would be greater than or equal to about 2.0 lbf/in³ (542.9 kN/m³).

Even more narrowly, the power density would be greater than or equal to about 3.0 lbf/in³ (814.3 kN/m³).

More narrowly, the power density is greater than or equal to about 4.0 lbf/in³ (1086 kN/m³).

Also, in embodiments, the power density is less than or equal to about 5.5 lbf/in³ (1493 kN/m³).

While certain prior engines have had power densities greater than 1.5, and even greater than 3.2, such engines have been direct drive engines and not associated with a gear reduction. In particular, the power density of an engine known as PW4090 was about 1.92 lbf/in³ (521.09 kN/m³), while the power density of an engine known as V2500 had a power density of 3.27 lbf/in³ (887.48 kN/m³).

Engines made with the disclosed architecture, and including turbine sections as set forth in this application, and with modifications coming from the scope of the claims in this application, thus provide very high efficient operation, and increased fuel efficiency and lightweight relative to their thrust capability.

Although an embodiment of this invention has been disclosed, a person of ordinary skill in this art would recognize that certain modifications would come within the scope of this application. For that reason, the following claims should be studied to determine the true scope and content of this invention.

## Claims

1. A gas turbine engine (120) comprising:
a high pressure turbine (130) configured to rotate with a high pressure compressor (126) as a high pressure spool (132) in a first direction about a central axis (C);
a low pressure turbine (134) configured to rotate with a low pressure compressor (124) as a low pressure spool (136) in said first direction about said central axis (C); and
a fan (122) connected to the low pressure spool (136) via a speed changing mechanism (48) and configured to rotate in said first direction,
**characterised in that**:
guide vanes (143) are positioned upstream of a first stage in said low pressure turbine (134) to, in use, direct gases downstream of said high pressure turbine (130) as the gases approach said low pressure turbine (134); and
a mid-turbine frame (142) supports said high pressure turbine (130), wherein said guide vanes (143) are positioned intermediate said mid-turbine frame (142) and said low pressure turbine (134).

2. The engine (120) as set forth in claim 1, wherein said speed changing mechanism (48) is a gear reduction.

3. The engine (120) as set forth in claim 2, wherein a planet gear is utilized to maintain the first direction of rotation between said fan (122) and said low pressure spool (136).

4. The engine (120) as set forth in claim 3, wherein said planet gear arrangement has a gear ratio of at least 2.3:1, meaning that the low pressure spool (136) turns at least 2.3 times as fast as said fan (122).

## Patentansprüche

1. Gasturbinentriebwerk (120), umfassend:
eine Hochdruckturbine (130), die so konfiguriert ist, dass sie sich mit einem Hochdruckverdichter (126) als eine Hochdruckspule (132) in einer ersten Richtung um eine Mittelachse (C) dreht;
eine Niederdruckturbine (134) die so konfiguriert ist, dass sie sich mit einem Niederdruckverdichter (124) als eine Niederdruckspule (136) in der ersten Richtung um die Mittelachse (C) dreht; und
einen Fan (122), der mit der Niederdruckspule (136) über einen Drehzahländerungsmechanismus (48) verbunden ist und so konfiguriert ist, dass er sich in der ersten Richtung dreht,
**dadurch gekennzeichnet, dass**:
Leitschaufeln (143) stromaufwärts einer ersten Stufe in der Niederdruckturbine (134) angeordnet sind, um, bei Betrieb, Gase stromabwärts der Hochdruckturbine (130) zu lenken, wenn sich die Gase der Niederdruckturbine (134) nähern; und
ein Mittelturbinenrahmen (142) die Hochdruckturbine (130) stützt, wobei die Leitschaufeln (143) zwischen dem Mittelturbinenrahmen (142) und der Niederdruckturbine (134) angeordnet sind.

2. Triebwerk (120) nach Anspruch 1, wobei der Drehzahländerungsmechanismus (48) eine Untersetzung ist.

3. Triebwerk (120) nach Anspruch 2, wobei ein Planetenrad verwendet wird, um eine erste Drehrichtung zwischen dem Fan (122) und der Niederdruckspule (136) aufrechtzuerhalten.

4. Triebwerk (120) nach Anspruch 3, wobei die Planetenradanordnung ein Übersetzungsverhältnis von mindestens 2,3 : 1 aufweist, was bedeutet, dass sich die Niederdruckspule (136) mindestens 2,3-mal so schnell wie der Fan (122) dreht.

## Revendications

1. Moteur à turbine à gaz (120) comprenant :
une turbine haute pression (130) configurée pour tourner avec un compresseur haute pression (126) en tant que bobine haute pression (132) dans une première direction autour d'un axe central (C) ;
une turbine basse pression (134) configurée pour tourner avec un compresseur basse pression (124) en tant que bobine basse pression (136) dans ladite première direction autour dudit axe central (C) ;
une soufflante (122) reliée à la bobine basse pression (136) via un mécanisme de changement de vitesse (48) et configurée pour tourner dans ladite première direction,
**caractérisé en ce que** :
des aubes directrices (143) sont positionnées en amont d'un premier étage dans ladite turbine basse pression (134) pour diriger, en cours d'utilisation, les gaz en aval de ladite turbine haute pression (130) à mesure que les gaz s'approchent de ladite turbine basse pression (134) ; et
un cadre de turbine intermédiaire (142) supporte ladite turbine haute pression (130), dans lequel lesdites aubes directrices (143) sont positionnées entre ledit cadre de turbine intermédiaire (142) et ladite turbine basse pression (134).

2. Moteur (120) selon la revendication 1, dans lequel ledit mécanisme de changement de vitesse (48) est un démultiplicateur.

3. Moteur (120) selon la revendication 2, dans lequel un engrenage planétaire est utilisé pour maintenir la première direction de rotation entre ladite soufflante (122) et ladite bobine basse pression (136).

4. Moteur (120) selon la revendication 3, dans lequel ledit agencement d'engrenage planétaire a un rapport d'engrenage d'au moins 2,3:1, ce qui signifie que la bobine basse pression (136) tourne au moins 2,3 fois plus vite que ladite soufflante (122).
